# EUROPÄISCHE PATENTSCHRIFT

(11) **EP 2 056 735 B1**
(45) Veröffentlichungstag und Bekanntmachung des Hinweises auf die Patenterteilung: **18.01.2012**
(21) Anmeldenummer: 07722259.4
(22) Anmeldetag: 20.04.2007
(51) Int. Cl.: A61C 8/00

(54) **MAGNETISCHES ABDRUCKSYSTEM**
MAGNETIC IMPRESSION SYSTEM
SYSTÈME D'EMPREINTE MAGNÉTIQUE

(30) Priorität: 09.05.2006 DE 102006021476
(43) Veröffentlichungstag der Anmeldung: 13.05.2009
(73) Patentinhaber: Profim LTD., 48157 Münster (DE)
(72) Erfinder: UNGER, Heinz-Dieter, 49080 Osnabrück (DE)
(74) Vertreter: Griepenstroh, Jörg
(86) Internationale Anmeldenummer: PCT/DE2007/000701
(87) Internationale Veröffentlichungsnummer: WO 2007/128263

(56) Entgegenhaltungen:
- JP-A- 2001 145 642
- US-A- 4 993 950
- US-A1- 2003 124 491

## Beschreibung

Die Erfindung betrifft ein Abdrucksystem für ein Kieferimplantat.

Wenn Kieferimplantate im Kiefer eines Patienten verankert sind, so ist eine Prothetik an diesen Implantaten zu befestigen. Hierzu müssen in der Prothetik Verbindungselemente vorgesehen sein, die mit dem Implantat verbunden werden können. Wenn ein Kieferabdruck genommen wird, müssen Verbindungselemente in der Abdruckmasse vorgesehen sein, die bei Entnahme des Abdrucks in dieser Abdruckmasse verbleiben und die während des Abdrucks fest mit den Kieferimplantaten verbunden sind, so dass sie die Ausrichtung und genaue Lage der Kieferimplantate berücksichtigen. Bei der Herstellung der Prothetik kann dann die Lage der Verbindungselemente, welche die Prothetik mit dem Implantat verbinden, exakt bestimmt werden, so dass ein sicherer Halt der Prothetik für den Patienten ermöglicht ist.

Bei der Abdrucknahme sind zwei Abdruckmethoden aus der Praxis bekannt: Gemäß einer ersten Verfahrensweise wird ein verschraubter Abdruckübertragungspfosten mit durchbohrtem Löffel verwendet. Dies stellt eine sehr genaue Methode der Abdrucknahme dar, weil Metallbauteile miteinander verschraubt werden und bündig aneinander gelegt werden. Diese Genauigkeit, die zu hervorragenden Ergebnissen bei der dann herzustellenden Prothetik führt, ist allerdings nachteilig, dass die Zugänglichkeit zu den Schrauben insbesondere im hinteren rachenseitigen Bereich des Kiefers problematisch sein kann. Insbesondere, wenn durch die Abdrucknahme ein Brechreiz des Patienten ausgelöst wird und eine schnelle Entnahme des Löffels erforderlich ist, kann eine schlechte Erreichbarkeit sowie die ohnehin vergleichsweise umständliche Demontage der Schraubverbindungen nachteilig sein.

Gemäß einem zweiten aus der Praxis bekannten Verfahren bei der Abdrucknahme wird ein aufgesteckter, eingerasteter Abdruckübertragungspfosten verwendet. Die mit einer Verschraubung einhergehenden Nachteile sind bei dieser Verfahrensweise vermieden. Allerdings wird zum Herstellen der Rastverbindung Kunststoff verwendet, so dass Kunststoff auf Metall einrastet. Nicht immer ist dabei die gewünschte Übertragungsgenauigkeit gewährleistet. Zudem ist nachteilig, dass Abdruckmaterial zwischen Implantat und Abdruckkappe laufen kann, wenn das aus Kunststoff bestehende Übertragungsteil nicht bündig einrastet. In solchen Fällen kann der Abdruck ungenau werden, somit zwangsläufig auch das zahntechnische Meistermodell und im Ergebnis die gesamte hergestellte Prothetik. Die Einfachheit bei der Handhabung der Abdruckelemente geht zu Lasten der Genauigkeit bei dieser zweiten Verfahrensweise.

Aus der JP 2000-024004 A, der US 4 993 950 A oder der US2003/0124491 ist jeweils eine Verbindung zwischen Implantat und einem mittels Magnetwirkung gehaltenen Aufsatz bekannt, allerdings dienen diese Verbindungs-Systeme nicht zur Erstellung von Abdrücken im Zuge der Herstellung von Prothesen, und weisen keinen Sekundärzylinder auf, welcher in zur einer vorbestimmiten Stellung formschlüssig an die Abdruckbasis anlegbar ist. Aus der WO 96/12451 A1 ist ebenfalls eine Verbindung zwischen einem Implantat und einem mittels Magnetwirkung gehaltenen Aufsatz bekannt, allerdings für Anwendungen außerhalb des Mundraumes, beispielsweise zur verbesserten Verankerung von Hörgeräten. Ein Primär- und ein Sekundärbauteil sind zudem nicht in einer eindeutigen, wiederholgenau einstellbaren Ausrichtung zueinander positioniert, so dass dieses System nicht als Abdrucksystem für ein Kieferimplantat geignet ist.

Der Erfindung liegt die Aufgabe zugrunde, ein Abdrucksystem für ein Kieferimplantat zu schaffen, welches eine hohe Genauigkeit bei der Abdrucknahme sicherstellt und welches eine unkomplizierte Handhabung und schnelle Entfernbarkeit des Abdrucks bzw. der dazu benötigten Hilfsmittel ermöglicht.

Diese Aufgabe wird durch ein Abdrucksystem mit den Merkmalen des Anspruchs 1 gelöst.

Die Erfindung schlägt mit anderen Worten vor, eine magnetische Verbindung zwischen den in der Abdruckmasse befindlichen Elementen, hier als Sekundärzylinder bezeichnet, und dem Implantat zu verwenden. Um physiologisch unbedenklich nicht einen im Kiefer des Patienten verbleibenden Magneten zu verwenden, ist das implantatseitige Magnetelement mit dem Implantat lösbar verbunden. Für die Abdrucknahme wird also ein Magnet bzw. ein ferromagnetisches Bauelement am Implantat befestigt, so dass die magnetische Verbindung mit dem Sekundärzylinder erfolgen kann, während das Implantat selbst beispielsweise aus einem nicht ferromagnetischen Werkstoff, wie zum Beispiel Titan bestehen kann.

Die am Markt üblichen Implantate weisen eine axiale Gewindebohrung auf, die zur Befestigung der Abdruckbasis genutzt werden kann. Als Abdruckbasis wird dabei der vorerwähnte Primärzylinder mitsamt seiner Schraube bezeichnet, welche den Primärzylinder am Implantat festlegt. Dabei kann entweder der Primärzylinder selbst oder aber die Schraube, beispielsweise insbesondere im Bereich des Schraubenkopfes, die gewünschten ferromagnetischen Eigenschaften aufweisen, um einen magnetischen Halt des Sekundärzylinders an der Abdruckbasis zu ermöglichen.

Erfindungsgemäß können sämtliche vorbeschriebenen Komponenten des Abdrucksystems aus metallischen Werkstoffen gefertigt sein und eine dementsprechende Präzision bei der Abdrucknahme ermöglichen, so dass die Anfertigung des Meistermodells und anschließend der Prothetik ebenfalls mit der gewünschten Präzision durchgeführt werden kann. Gleichzeitig wird durch die magnetischen Haltekräfte eine schnelle, werkzeuglose Entfernung des Abdrucks aus dem Mund des Patienten ermöglicht, was in bestimmten Notfällen vorteilhaft sein kann und was durch die werkzeuglose Entfernbarkeit des Abdrucks auch außerhalb von Notfällen ein für den Patienten und den behandelnden Arzt vorteilhaft schnelles und zügiges Arbeiten bei der Abdrucknahme ermöglicht.

Dadurch, dass sowohl die Abdruckbasis als auch der Sekundärzylinder vom Implantat nach der Abdrucknahme entfernt werden können, ist in physiologisch völlig unbedenklicher Weise die Verweildauer von Magneten am bzw. im Kiefer des Patienten auf einen physiologisch unbedenklich kurzen Zeitraum beschränkt. Zudem ist keine aufwendige magnetische Abschirmung erforderlich, wie dies beispielsweise bei ständig im Patienten verbleibenden Magneten wünschenswert wäre.

Durch die Formgebung der Abdruckbasis und des Sekundärzylinders ist sichergestellt, dass nur eine definierte, eindeutige Positionierung des Sekundärzylinders erfolgen kann. Hierzu können entsprechende Vorsprünge und Ausnehmungen, also zumindest ein Vorsprung und eine zugeordnete Ausnehmung, an einerseits der Abdruckbasis und andererseits dem Sekundärzylinder vorgesehen sein.

Besonders vorteilhaft kann dabei vorgesehen sein, dass der Vorsprung bzw. die Ausnehmung von außen, also am äußeren Umfang der jeweiligen Bauteile, sichtbar sind, so dass für den behandelnden Arzt bereits bei der Befestigung der Abdruckbasis am Implantat eine Bestimmung möglich ist, wie später der Sekundärzylinder ausgerichtet sein wird und so dass bei Montage des Sekundärzylinders die Lage des Vorsprungs und der Ausnehmung problemlos von außen erkennbar sind, so dass die beiden korrespondierenden Bauteile einfach und schnell in ihrer korrekten Ausrichtung zueinander gehalten und zusammengeführt werden können, um die magnetische Verbindung herzustellen.

Vorteilhaft kann sich der Vorsprung zu dem korrespondierend anderen Bauteil hin verjüngen, so dass eine einfache Zusammenführung der beiden Bauteile und eine automatische Zentrierung bzw. Ausrichtung der beiden Bauteile zueinander folgt, je weiter die beiden miteinander zusammenwirkenden Bauteile zusammengeführt werden.

Vorteilhaft kann der Primärzylinder, der ja an das Implantat anschließt, in verschiedenen Ausgestaltungen vorliegen, so dass von mehreren Primärzylindern jeweils derjenige ausgewählt werden kann, der an das jeweils verwendete Implantat angepasst ist, so dass das vorgeschlagene Abdrucksystem mit unterschiedlichen Implantaten verwendet werden kann, beispielsweise mit unterschiedlich großen Implantaten desselben Herstellers oder unterschiedlichen Implantattypen verschiedener Hersteller.

Der Schraubenkopf kann als mittleres Bauteil oder Zwischenstück einen von außen sichtbaren Abschnitt der gesamten Baugruppe bilden, so dass am Abdrucksystem von außen der Primärzylinder, der Schraubenkopf und der Sekundärzylinder sichtbar sind. So ergäben sich wenigstens zwei Grenzlinien, nämlich von dem Schraubenkopf einerseits zum Primärzylinder und andererseits zum Sekundärzylinder.

Die Primär- und Sekundärzylinder können jedoch vorteilhaft einen Aufnahmeraum für den Schraubenkopf bilden, so dass dieser unsichtbar im Inneren dieser beiden Zylinder angeordnet ist. Auf diese Weise wird erreicht, dass lediglich Primär- und Sekundärzylinder an der Außenköntur des Abdrucksystems aneinander grenzen, so dass möglichst wenig derartige Grenzlinien geschaffen werden. Um eine möglichst hohe Sicherheit gegen das unerwünschte Eindringen von Abdruckmasse zu bieten, ist die Reduzierung der Anzahl derartiger Grenzlinien bzw. Trennlinien vorteilhaft.

Der als Raum bezeichnete und demzufolge umschlossene Aufnahmeraum wird dadurch gebildet, dass er von dem Primär- und dem Sekundärzylinder begrenzt wird. Dabei kann die als Aufnahmemulde bezeichnte, offene Ausnehmung ausschließlich in einem der beiden Bauteile vorgesehen sein, beispielsweise in dem Primärzylinder. In diesem Fall kann der Sekundärzylinder beispielsweise mit einer Unterseite, die keine Ausnehmung aufweist, auf den Primärzylinder aufgesetzt werden und wie ein Deckel die offene, den Schraubenkopf enthaltende Aufnahmemulde schließen bzw. zu einem Aufnahmeraum vervollständigen.

Vorteilhaft können beide Zylinder, also Primär- und Sekundärzylinder, jeweils eine Aufnahmemulde für den Schraubenkopf bilden. So können dünne, eine Aufnahmemulde umgebende Wandflächen zugunsten einer möglichst großen Stabilität möglichst klein ausgeführt sein, nämlich in axialer Richtung des jeweiligen Zylinders möglichst kurz.

Ein Ausführungsbeispiel der Erfindung wird nachfolgend anhand der rein schematischen Darstellungen näher erläutert. Dabei zeigt
- Fig. 1: in auseinandergezogener und geschnittener Darstellung ein magnetisches Abdrucksystem mit einem ausschnittsweise dargestellten Implantat,
- Fig. 2: die Bauelemente der Fig. 1, ebenfalls geschnitten, im zusammengefügten Zustand, und die

- Fig. 3 und 4: die Bauelemente des magnetischen Abdruck-systems in einer Seitenansicht, auseinandergezogen und aus zwei unterschiedlichen Blickwinkeln.

In den Darstellungen ist mit 1 jeweils ein Implantat bezeichnet, welches nur teilweise dargestellt ist und welches im Kiefer eines Patienten verankert werden kann. Das Implantat 1 weist ein Innengewinde 2 auf sowie eine im Querschnitt polygonale beispielsweise sechseckige oder achteckige Ansatzfläche 3, wobei das Innengewinde 2 und die Ansatzfläche 3 am Implantat vorgesehen sind, um eine Suprakonstruktion befestigen zu können.

Vorschlagsgemäß wird zur Abdrucknahme ein magnetisches Abdrucksystem verwendet, dessen Primärzylinder 4 in Anpassung an die Ansatzfläche 3 ausgestaltet ist und auf das Implantat 1 aufgesetzt werden kann. Der Primärzylinder 4 weist eine zentrale Durchgangsbohrung auf, so dass er mittels einer Schraube 5, welche mit dem Innengewinde 2 zusammenwirkt, am Implantat 1 festgelegt werden kann. Der Primärzylinder 4 weist eine Aufnahmemulde 6 auf, in welche ein Schraubenkopf 7 der Schraube 5 eintaucht.

Das magnetische Abdrucksystem umfasst weiterhin einen Sekundärzylinder 8, der eine Aufnahmemulde 9 für den Schraubenkopf 7 aufweist und der formschlüssig an den Primärzylinder 4 angelegt werden kann, so dass die beiden Aufnahmemulden 6 und 9 insgesamt einen Hohlraum zur Aufnahme des Schraubenkopfes 7 bilden.

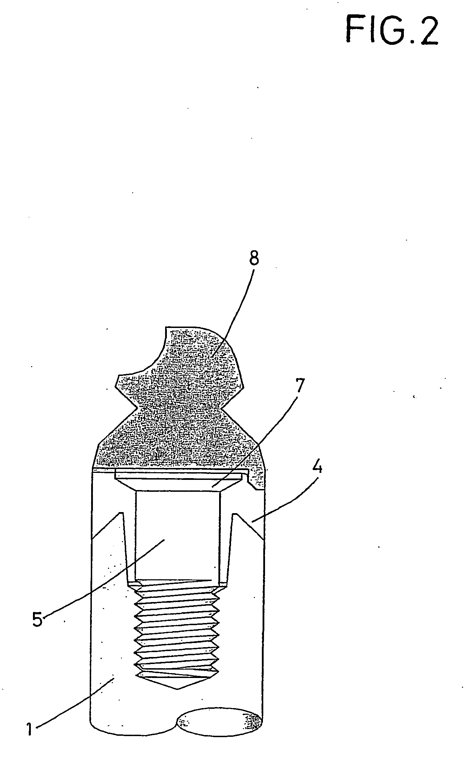

Fig. 2 zeigt das magnetische Abdrucksystem im montierten Zustand.

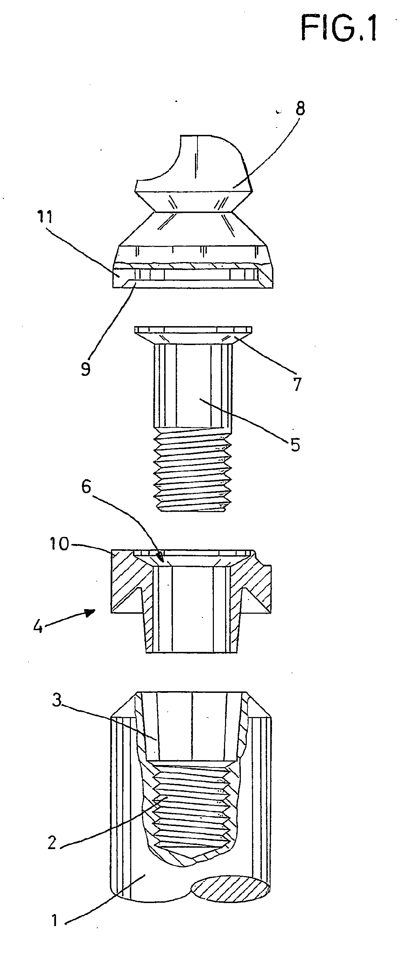

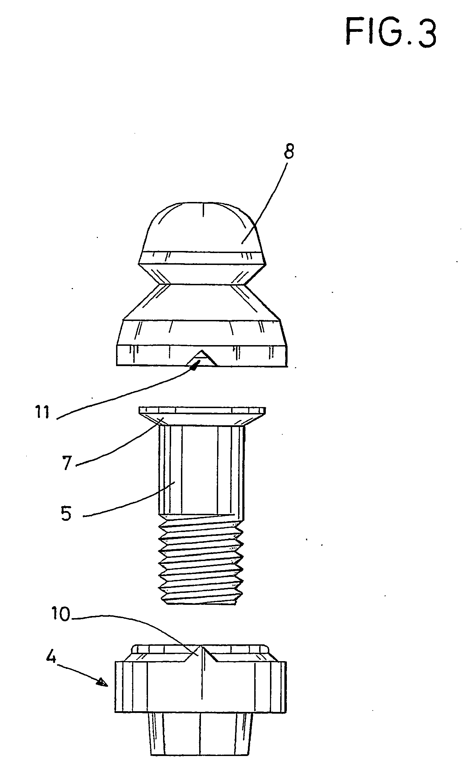

Fig. 3 zeigt in einer nicht geschnittenen seitlichen Ansicht, die gemäß Fig. 1 und 2 von der linken Seite des Abdrucksystems auf das Abdrucksystem gerichtet ist, dass am Primärzylinder 4 ein Vorsprung 10 vorgesehen ist, der sich nach oben hin, also zum Sekundärzylinder 8 hin, verjüngt. Im Sekundärzylinder 8 ist eine mit dem Vorsprung 10 korrespondierende Ausnehmung 11 vorgesehen, so dass der Sekundärzylinder 8 in nur einer einzigen, definierten Stellung auf dem Primärzylinder 4 bündig aufliegen kann.

Der Sekundärzylinder 8 wird an der Abdruckbasis magnetisch gehalten, die aus der Schraube 5 und dem Primärzylinder 4 besteht. Das Überwinden dieser magnetischen Haltekraft reicht aus, um den Sekundärzylinder 8 von der Abdruckbasis zu lösen. Es kann beispielsweise vorgesehen sein, einen Magneten im Sekundärzylinder 8 anzuordnen und die Schraube 5 ferromagnetisch auszugestalten, und / oder den Primärzylinder 4 ferromagnetisch auszugestalten, so dass der im Sekundärzylinder 8 vorhandene Magnet für die erforderlichen Haltekräfte Sorge trägt, um diesen Sekundärzylinder 8 an der Abdruckbasis zu halten.

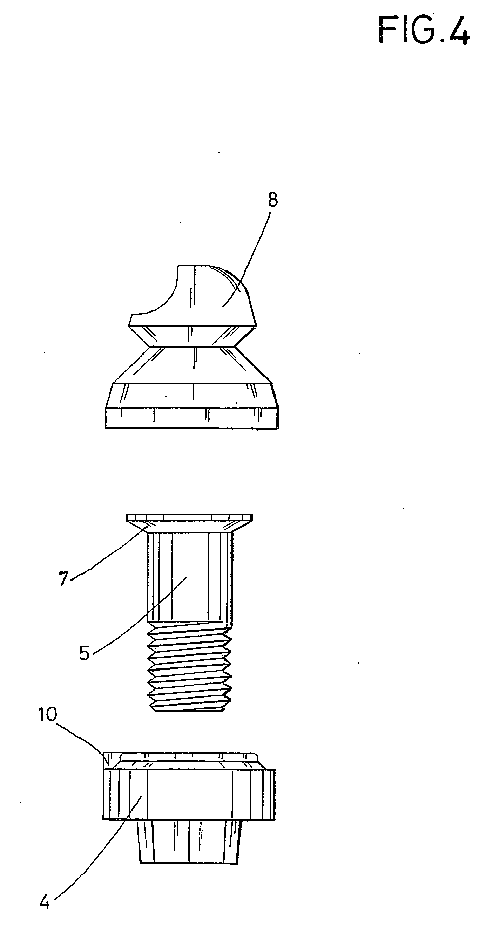

Fig. 4 zeigt in einer mit Fig. 3 vergleichbaren seitlichen Ansicht die Elemente des Abdrucksystems aus der Blickrichtung, wie sie auch in den Fig. 1 und 2 gewählt ist.

Bei dem dargestellten Ausführungsbeispiel ist der jeweils unten dargestellte, zum Implantat 1 gerichtete Bereich des Primärzylinders 4 als Stutzen mit einem mehreckigen äußeren Umfang dargestellt. In Anpassung an unterschiedliche Implantatsysteme können dementsprechend unterschiedlich gestaltete Primärzylinder 4 Verwendung finden, gegebenenfalls in Verbindung mit an das jeweilige Implantat angepassten Schrauben 5, so dass der grundsätzlich stets gleich ausgestaltete Sekundärzylinder 8 wirtschaftlich in hohen Stückzahlen gefertigt werden kann, als Teil eines Implantatsystems, welches mittels der entsprechend ausgestalteten Primärzylinder 4 und gegebenenfalls unterschiedlicher Schrauben 5 an einer Vielzahl unterschiedlicher Implantattypen verwendet werden kann.

## Patentansprüche

1. Magnetisches Abdrucksystem für ein Kiefer-Implantat (1),
mit einem als Primärzylinder (4) bezeichneten, ringförmigen Bauteil,
welches mittels einer sich durch die Ringmitte erstreckenden Schraube (5) am Implantat (1) befestigbar ist,
wobei der Primärzylinder (4) und die Schraube (5) gemeinsam als Abdruckbasis bezeichnet sind,
und mit einem als Sekundärzylinder (8) bezeichneten Bauteil, wobei der Sekundärzylinder (8) magnetisch an der Abdruckbasis gehalten und unter Überwindung der Magnetkraft von der Abdruckbasis lösbar ist,
**dadurch gekennzeichnet, dass** der Sekundärzylinder (8) in nur einer vorbestimmten Stellung formschlüssig an die Abdruckbasis anlegbar ist.

2. Abdrucksystem nach Anspruch 1, **dadurch gekennzeichnet, dass** die formschlüssige Ausrichtung von Sekundärzylinder (8) und Abdruckbasis durch miteinander korrespondierende wenigstens einen Vorsprung (10) und wenigstens eine Ausnehmung (11) bestimmt ist,
wobei der Vorsprung (10) und die Ausnehmung (11) sich jeweils bis zur Außenfläche des Sekundärzylinder (8) bzw. der Abdruckbasis erstrecken.

3. Abdrucksystem nach Anspruch 2, **dadurch gekennzeichnet, dass** sich der Vorsprung (10) zu der korrespondierenden Ausnehmung (11) hin in axialer Richtung verjüngt.

4. Abdrucksystem nach Anspruch 2 oder 3, **dadurch gekennzeichnet, dass** der Vorsprung (10) und die Ausnehmung (11) von außen, also am äußeren Umfang des Primärzylinders (4) beziehungsweise des Sekundärzylinders (8) sichtbar sind.

5. Abdrucksystem nach einem der vorhergehenden Ansprüche, **gekennzeichnet durch** mehrere wahlweise verwendbare Primärzylinder (4), die an unterschiedliche Implantate (1) angepasst sind.

6. Abdrucksystem nach einem der vorhergehenden Ansprüche, **dadurch gekennzeichnet, dass** die Primär-und Sekundärzylinder (4, 8) einen Aufnahmeraum für einen Schraubenkopf (7) der Schraube (5) bilden.

7. Abdrucksystem nach Anspruch 6, **dadurch gekennzeichnet, dass** die Primär- und Sekundärzylinder (4, 8) jeweils eine Aufnahmemulde (6, 9) aufweisen, welche gemeinsam den Aufnahmeraum für den Schraubenkopf (7) bilden.

## Claims

1. A magnetic impression system for a jaw implant (1), comprising a ring-shaped component, designated as primary cylinder (4),
that can be secured to the implant (1) by means of a screw (5) that extends through the centre of the ring,
the primary cylinder (4) and the screw (5) being considered to form together the impression base,
and a component, designated secondary cylinder (8),
the secondary cylinder (8) being held magnetically on the impression base and detachable from the impression base by overcoming the magnetic force,
wherein the secondary cylinder (8) can be placed on the impression base in a formfitting manner in one predetermined position only.

2. An impression system according to claim 1 wherein the form-fit alignment of secondary cylinder (8) and impression base is determined by reciprocally corresponding at least one projection (10) and at least one recess (11), with the projection (10) and the recess (11) each extending to the outer face of the secondary cylinder (8) or of the impression base.

3. An impression system according to claim 2 wherein the projection (10) tapers axially toward the corresponding recess (11).

4. An impression system according to claim 2 or 3 wherein the projection (10) and the recess (11) are visible from the outside, i.e. on the outer periphery of the primary cylinder (4) and secondary cylinder (8) respectively.

5. An impression system according to any one of the preceding claims **characterised by** a plurality of optionally usable primary cylinders (4) which are adapted to suit different implants (1).

6. An impression system according to any one of the preceding claims wherein the primary and secondary cylinder (4, 8) form a space to receive a screw head (7) of the screw (5).

7. An impression system according to claim 6 wherein the primary and secondary cylinder (4, 8) each exhibit a receiving pocket (6, 9) which together form the receiving space for the screw head (7).

## Revendications

1. Système de prise d'empreinte magnétique pour un implant maxillaire (1),
avec une pièce annulaire, appelée cylindre primaire (4), qui peut être fixée sur l'implant (1) au moyen d'une vis (5) s'étendant à travers le centre de l'anneau, l'ensemble formé par le cylindre primaire (4) et la vis (5) étant appelé base d'empreinte,
et avec une pièce appelée cylindre secondaire (8), le cylindre secondaire (8) étant maintenu sur la base d'empreinte de façon magnétique et pouvant être désolidarisé de celle-ci en exerçant une force opposée supérieure à la force magnétique, **caractérisé en ce que** le cylindre secondaire (8) peut être placé sur la base d'empreinte uniquement dans une position prédéfinie, par complémentarité de forme.

2. Système de prise d'empreinte selon la revendication 1, **caractérisé en ce que** l'alignement par complémentarité de forme du cylindre secondaire (8) et de la base d'empreinte est déterminé par au moins une saillie (10) et au moins un évidement (11) mutuellement correspondants,
la saillie (10) et l'évidement (11) s'étendant respectivement jusqu'à la surface extérieure du cylindre secondaire (8) ou de la base d'empreinte.

3. Système de prise d'empreinte selon la revendication 2, **caractérisé en ce que** la saillie (10) se rétrécit en direction axiale vers l'évidement (11) correspondant.

4. Système de prise d'empreinte selon la revendication 2 ou 3, **caractérisé en ce que** la saillie (10) et l'évidement (11) sont visibles de l'extérieur, donc respectivement sur le pourtour extérieur du cylindre primaire (4) ou du cylindre secondaire (8).

5. Système de prise d'empreinte selon l'une quelconque des revendications précédentes, **caractérisé par** plusieurs cylindres primaires (4) pouvant être sélectivement utilisés, qui sont adaptés à différents implants (1).

6. Système de prise d'empreinte selon l'une quelconque des revendications précédentes, **caractérisé en ce que** le cylindre primaire (4) et le cylindre secondaire (8) forment un espace de logement pour une tête de vis (7) de la vis (5).

7. Système de prise d'empreinte selon la revendication 6, **caractérisé en ce que** le cylindre primaire (4) et le cylindre secondaire (8) comportent respectivement une cuvette de logement (6, 9), les cuvettes de logement (6, 9) formant ensemble l'espace de logement pour la tête de vis (7).
